# EUROPEAN PATENT APPLICATION

(11) **EP 3 244 607 A1**
(43) Date of publication of application: **15.11.2017**
(21) Application number: 17167279.3
(22) Date of filing: 20.04.2017
(51) Int. Cl.: H04N 5/232

(54) **CAMERA DEVICE, METHOD FOR CAMERA DEVICE, AND NON-TRANSITORY COMPUTER READABLE STORAGE MEDIUM**

(30) Priority: 11.05.2016 US 201662334456 P; 19.01.2017 US 201715409550
(71) Applicant: HTC Corporation, Taoyuan City 330 (TW)
(72) Inventor: YU, Wen-Hsiang, Taoyuan District, Taoyuan City 330 (TW)
(74) Representative: Klang, Alexander H.

(57) **Abstract**

A method includes receiving a sensing signal corresponding to an excursion of a camera; acquiring an ideal compensation value according to the sensing signal; controlling an optical image stabilization (OIS) component to execute an OIS stabilization operation to compensate for a first portion of the excursion of the camera, in which the OIS stabilization operation corresponds to an actual compensation value; and controlling an electronic image stabilization (EIS) component to execute an EIS stabilization operation according to the ideal compensation value and the actual compensation value to compensate for a second portion of the excursion of the camera.

## Description

### RELATED APPLICATIONS

This application claims priority to U.S. Provisional Application Serial Number 62/334,456, filed May 11, 2016, which is herein incorporated by reference.

### BACKGROUND

### Technical Field

The present disclosure relates to an electronic device, a method, and a non-transitory computer readable storage medium. More particularly, the present disclosure relates to a camera device, a method for a camera device, and a non-transitory computer readable storage medium.

### Description of Related Art

With advances in electronic technology, camera devices, such as smart phones and tablet computers, are being increasingly used.

A camera device may include a camera and a stabilization system. The stabilization system is configured to compensate for vibrations of the camera, so that even if the camera is shaken when capturing an image or recording a video, distortion of the image or video can be avoided. However, due to limitations with respect to the sizes of the actuators in the stabilization system, in some situations, it is not possible to properly correct the image or the video.

### SUMMARY

One aspect of the present disclosure is related to a method. In accordance with one embodiment of the present disclosure, the method is applied to a camera device. The method includes receiving a sensing signal corresponding to an excursion of a camera; acquiring an ideal compensation value according to the sensing signal; controlling an optical image stabilization (OIS) component to execute an OIS stabilization operation to compensate for a first portion of the excursion of the camera, in which the OIS stabilization operation corresponds to an actual compensation value; and controlling an electronic image stabilization (EIS) component to execute an EIS stabilization operation according to the ideal compensation value and the actual compensation value to compensate for a second portion of the excursion of the camera.

Another aspect of the present disclosure is related to a camera device. In accordance with one embodiment of the present disclosure, the camera device includes a camera, an optical image stabilization (OIS) component, an electronic image stabilization (EIS) component, one or more processing components, a memory, and one or more programs. The one or more processing components are electrically connected to the camera, the EIS component, and the OIS system. The memory is electrically connected to the one or more processing components. The one or more programs are stored in the memory and configured to be executed by the one or more processing components. The one or more programs include instructions for receiving a sensing signal corresponding to an excursion of a camera; acquiring an ideal compensation value according to the sensing signal; controlling the OIS component to execute an OIS stabilization operation to compensate for a first portion of the excursion of the camera, in which the OIS stabilization operation corresponds to an actual compensation value; and controlling the EIS component to execute an EIS stabilization according to the ideal compensation value and the actual compensation value to compensate for a second portion of the excursion of the camera.

Another aspect of the present disclosure is related to a non-transitory computer readable storage medium. In accordance with one embodiment of the present disclosure, the non-transitory computer readable storage medium storing one or more programs includes instructions, which when executed, causes one or more processing components to perform operations including receiving a sensing signal corresponding to an excursion of a camera; acquiring an ideal compensation value according to the sensing signal; controlling an optical image stabilization (OIS) component to execute an OIS stabilization operation to compensate for a first portion of the excursion of the camera, in which the OIS stabilization operation corresponds to an actual compensation value; and controlling an electronic image stabilization (EIS) component to execute an EIS stabilization operation according to the ideal compensation value and the actual compensation value to compensate for a second portion of the excursion of the camera.

Through the operations of one embodiment described above, a video can be stabilized by both the OIS component and the EIS component, so that the quality of the video can be increased.

### BRIEF DESCRIPTION OF THE DRAWINGS

The invention can be more fully understood by reading the following detailed description of the embodiments, with reference made to the accompanying drawings as follows:
Fig. 1 is a schematic block diagram of a camera device in accordance with one embodiment of the present disclosure.
Fig. 2 is a flowchart of an operating method in accordance with one embodiment of the present disclosure.
Fig. 3 is a flowchart of an operating method in accordance with another embodiment of the present disclosure.
Fig. 4 is a flowchart of an operating method in accordance with another embodiment of the present disclosure.
Fig. 5 shows an illustrative example in accordance with one embodiment of the present disclosure.

### DETAILED DESCRIPTION

Reference will now be made in detail to the present embodiments of the invention, examples of which are illustrated in the accompanying drawings. Wherever possible, the same reference numbers are used in the drawings and the description to refer to the same or like parts.

It will be understood that, in the description herein and throughout the claims that follow, when an element is referred to as being "connected" or "coupled" to another element, it can be directly connected or coupled to the other element or intervening elements may be present. In contrast, when an element is referred to as being "directly connected" or "directly coupled" to another element, there are no intervening elements present. Moreover, "electrically connect" or "connect" can further refer to the interoperation or interaction between two or more elements.

It will be understood that, in the description herein and throughout the claims that follow, although the terms "first," "second," etc. may be used to describe various elements, these elements should not be limited by these terms. These terms are only used to distinguish one element from another. For example, a first element could be termed a second element, and, similarly, a second element could be termed a first element, without departing from the scope of the embodiments.

It will be understood that, in the description herein and throughout the claims that follow, the terms "comprise" or "comprising," "include" or "including," "have" or "having," "contain" or "containing" and the like used herein are to be understood to be open-ended, i.e., to mean including but not limited to.

It will be understood that, in the description herein and throughout the claims that follow, the phrase "and/or" includes any and all combinations of one or more of the associated listed items.

It will be understood that, in the description herein and throughout the claims that follow, words indicating direction used in the description of the following embodiments, such as "above," "below," "left," "right," "front" and "back," are directions as they relate to the accompanying drawings. Therefore, such words indicating direction are used for illustration and do not limit the present disclosure.

It will be understood that, in the description herein and throughout the claims that follow, unless otherwise defined, all terms (including technical and scientific terms) have the same meaning as commonly understood by one of ordinary skill in the art to which this invention belongs. It will be further understood that terms, such as those defined in commonly used dictionaries, should be interpreted as having a meaning that is consistent with their meaning in the context of the relevant art and will not be interpreted in an idealized or overly formal sense unless expressly so defined herein.

It will be understood that, in the description herein and throughout the claims that follow, "around," "about," "approximately" or "substantially" shall generally refer to any approximate value of a given value or range, in which it is varied depending on various arts in which it pertains, and the scope of which should be accorded with the broadest interpretation understood by the person skilled in the art to which it pertains, so as to encompass all such modifications and similar structures or operations. Numerical quantities given herein are approximate, meaning that the term "around," "about," "approximately" or "substantially" can be inferred if not expressly stated, or meaning other approximate values.

Any element in a claim that does not explicitly state "means for" performing a specified function, or "step for" performing a specific function, is not to be interpreted as a "means" or "step" clause as specified in 35 U.S.C. § 112(f). In particular, the use of "step of" in the claims herein is not intended to invoke the provisions of 35 U.S.C. § 112(f).

One aspect of the present disclosure is related to a camera device. In the paragraphs below, a smart phone will be taken as an example to describe details of the camera device. However, another camera device, such as a tablet computer or a camera, is within the contemplated scope of the present disclosure.

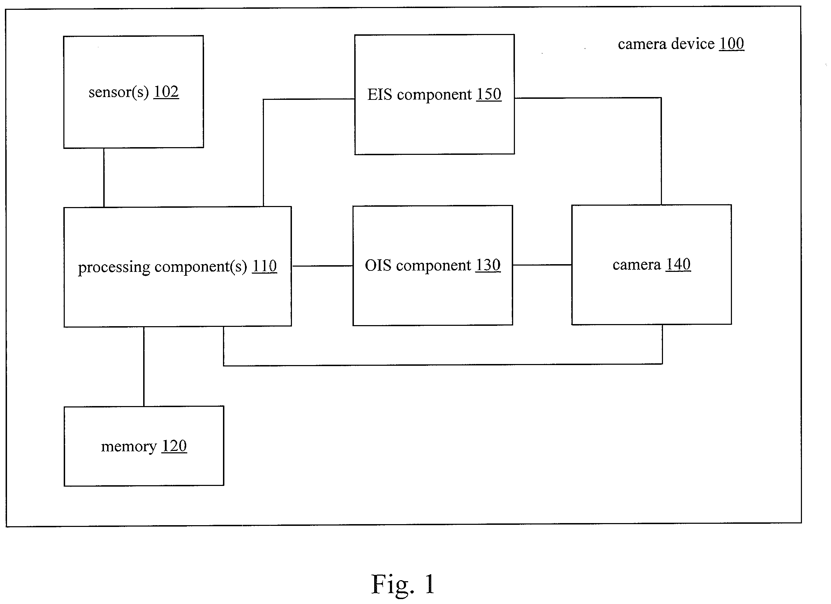

Fig. 1 is a schematic block diagram of a camera device 100 in accordance with one embodiment of the present disclosure. In this embodiment, the camera device 100 includes one or more sensors 102, one or more processing components 110, a memory 120, an optical image stabilization (OIS) component 130, a camera 140, and an electronic image stabilization (EIS) component 150. In this embodiment, the one or more processing components 110 are electrically connected to the sensors 102, the memory 120, the OIS component 130, the camera 140, and the EIS component 150. The OIS component 130 is electrically connected to the camera 140. The EIS component 150 is also electrically connected to the camera 140. It should be noted that the EIS component 150 can be integrated into or separated from the one or more processing components 110, and the present disclosure is not limited to the embodiment described herein.

In one embodiment, the one or more sensors 102 may be realized by, for example, one or more gyro sensors, one or more angular velocity sensors, or an assembly of one or more angular velocity sensors and one or more acceleration sensors, but is not limited in this regard. In one embodiment, the one or more processing components 110 can be realized by, for example, one or more processors, such as central processors, digital signal processors (DSPs), image signal processors (ISPs) and/or microprocessors, but are not limited in this regard. In one embodiment, the memory 120 includes one or more memory devices, each of which comprises, or a plurality of which collectively comprise a computer readable storage medium. The memory 120 may include a read-only memory (ROM), a flash memory, a floppy disk, a hard disk, an optical disc, a flash drive, a tape, a database accessible from a network, or any storage medium with the same functionality that can be contemplated by persons of ordinary skill in the art to which this invention pertains. In one embodiment, the EIS component 150 can be realized by, for example, one or more processors, such as central processors, digital signal processors (DSPs), image signal processors (ISPs) and/or microprocessors, but are not limited in this regard. In one embodiment, the EIS component 150 can be integrated into the one or more processing components 110, but is not limited in this regard. In one embodiment, functions of the EIS component 150 can be realized by a processor implementing a computer program stored in a computer readable storage medium.

In one embodiment, the one or more processing components 110 may run or execute various software programs and/or sets of instructions stored in the memory 120 to perform various functions for the camera device 100 and to process data.

In one embodiment, the EIS component 150 can be configured to execute an EIS stabilization operation to separately shift frames of a video to compensate for jitters between the frames. In one embodiment, a resolution of an image sensor (not shown) of the camera 140 is slightly larger than a resolution of the video, so that the recorded frames (e.g., 1024*768) are slightly larger than the resolution (e.g., 800*600) of the video. The EIS component 150 can utilize the space outside of the border of the video to shift the frames of the video to compensate for an excursion caused by shaking of a user's hand.

In one embodiment, the OIS component 130 can be configured to execute an OIS stabilization operation to align an optical axis of the camera 140 to compensate for an excursion caused by shaking of a user's hand. In one embodiment, the OIS component 130 may align the optical axis of the camera 140 by moving one or more of the camera 140, an image sensor of the camera 140, and a lens of the camera 140 according to the excursion. In one embodiment, the OIS component 130 may align the optical axis of the camera 140 by using actuators of the OIS component 130.

In one embodiment, the sensors 102 may be disposed on the camera device 100. In one embodiment, the sensors 102 may be configured to detect an angular velocity of the camera device 100 and accordingly generate a sensing signal. In a different embodiment, the sensors 102 may be configured to detect an angular velocity and an acceleration of the camera device 100 and accordingly generate a sensing signal.

Under a condition that the camera device 100 records a video and shaking of a user's hand causes an excursion (e.g., 3.5mm) of the camera 140, the one or more processing components 110 may control the OIS component 130 to execute an OIS stabilization operation to compensate for a first portion of the excursion (e.g., 2mm) of the camera 140. In addition, the one or more processing components 110 may control the EIS component 130 to execute an EIS stabilization operation to compensate for a second portion of the excursion (e.g., the rest of the excursion) (e.g., 1.5mm) of the camera 140.

In some approaches, the video may be stabilized utilizing only an OIS component. However, due to limitations with respect to the sizes of the actuators in the OIS component, a long excursion caused by shaking of a user's hand is not able to be corrected properly.

In some different approaches, the video may be stabilized utilizing only an EIS component. However, the EIS component can not sharpen blurred images in the video as effectively as an OIS component can.

However, in one embodiment of the present disclosure, the video can be stabilized by both of the OIS component 130 and the EIS component 150 to compensate for identical excursion, so that the video quality can be increased.

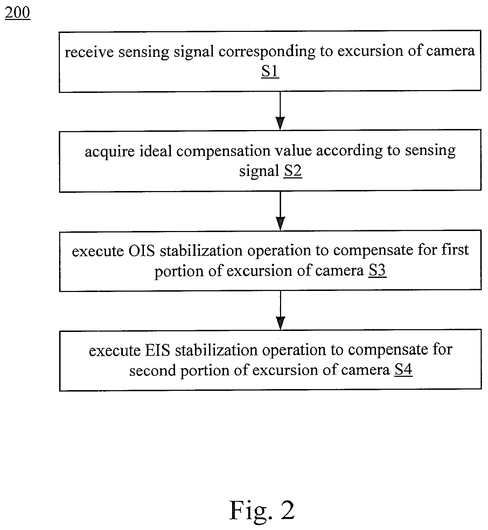

Details of the present disclosure are described in the paragraphs below with reference to an operating method in Fig. 2. However, the present disclosure is not limited to the embodiment below.

It should be noted that the operating method can be applied to a camera device having a structure that is the same as or similar to the structure of the camera device 100 shown in Fig. 1. To simplify the description below, the embodiment shown in Fig. 1 will be used as an example to describe the operating method according to an embodiment of the present disclosure. However, the present disclosure is not limited to application to the embodiment shown in Fig. 1.

Reference is made to Figs. 1 and 2. The operating method 200 includes the operations as set forth below.

In operation S1, the one or more processing components 110 receive a sensing signal corresponding to an excursion (e.g., 3.5mm) of the camera 140. In one embodiment, the sensing signal is generated by the sensors 102. In one embodiment, the sensing signal corresponds to an angular velocity of the camera device 100. In a different embodiment, the sensing signal corresponds to an angular velocity and an acceleration of the camera device 100.

In operation S2, the one or more processing components 110 acquire an ideal compensation value, which corresponds to the excursion (e.g., 3.5mm) of the camera 140, according to the sensing signal. In one embodiment, the ideal compensation value is used for ideally compensating for the excursion of the camera 140. In one embodiment, the ideal compensation value may be an angle, a distance, and/or a location.

In one embodiment, the one or more processing components 110 may integrate the sensing signal (e.g., by an integrator), and acquire the ideal compensation value according to the integration result.

In one embodiment, the one or more processing components 110 may calculate an angular displacement, which corresponds to the excursion (e.g., 3.5mm) of the camera 140, according to the sensing signal. In one embodiment, the one or more processing components 110 may integrate the sensing signal (e.g., by an integrator) to generate the angular displacement of the camera device 100.

In one embodiment, the one or more processing components 110 may acquire the ideal compensation value corresponding to the excursion (e.g., 3.5mm) of the camera 140 according to the angular displacement. In one embodiment, the ideal compensation value may be equal to the angular displacement (e.g., 3.5 degrees) of the camera device 100 corresponding to the excursion (e.g., 3.5mm) of the camera 140.

In operation S3, the one or more processing components 110 controls the OIS component 130 to execute an OIS stabilization operation to compensate for a first portion (e.g., 2mm) of the excursion (e.g., 3.5mm) of the camera 140. In one embodiment, the OIS stabilization operation corresponds to an actual compensation value (e.g., 2 degrees). In one embodiment, the actual compensation value may be an angle, a distance, and/or a location.

In one embodiment, the actual compensation value may be predetermined. In one embodiment, the actual compensation value corresponds to a physical limitation of the OIS component 130. In one embodiment, the actual compensation value corresponds to a physical limitation corresponding to one or more actuators of the OIS component 130. Details of such embodiments are described in an operating method 300 described below (e.g., operation S3 may include operations T3, T4 in the operating method 300), but the present disclosure is not limited in this regard.

In a different embodiment, the actual compensation value may be acquired by detecting one or more locations of the one or more of the camera 140, the image sensor of the camera 140, and the lens of the camera 140, but the present disclosure is not limited in this regard. Details of such an embodiment are described in an operating method 400 described below (e.g., operation S3 may include operations U3, U4 in the operating method 400), but the present disclosure is not limited in this regard.

In operation S4, the one or more processing components 110 control the EIS component 150 to execute an EIS stabilization operation according to the ideal compensation value (e.g., 3.5 degrees) and the actual compensation value (e.g., 2 degrees) to compensate for a second portion (e.g., 1.5mm) of the excursion of the camera (e.g., 3.5mm). In one embodiment, the one or more processing components 110 control the EIS component 150 to execute an EIS stabilization operation according to a difference between the ideal compensation value (e.g., 3.5 degrees) and the actual compensation value (e.g., 2 degrees) to compensate for the second portion (e.g., 1.5mm) of the excursion of the camera (e.g., 3.5mm).

In one embodiment, a summation of the first portion and second portion of the excursion of the camera 140 is equal to the excursion of the camera 140. In some various embodiments, the summation of the first portion and second portion of the excursion of the camera 140 may be smaller than the excursion of the camera 140 based on actual requirements, and the present disclosure is not limited by the embodiment above.

Through the operations described above, both of the OIS component 130 and the EIS component 150 can compensate for the excursion of the camera 140, so that the video quality can be increased.

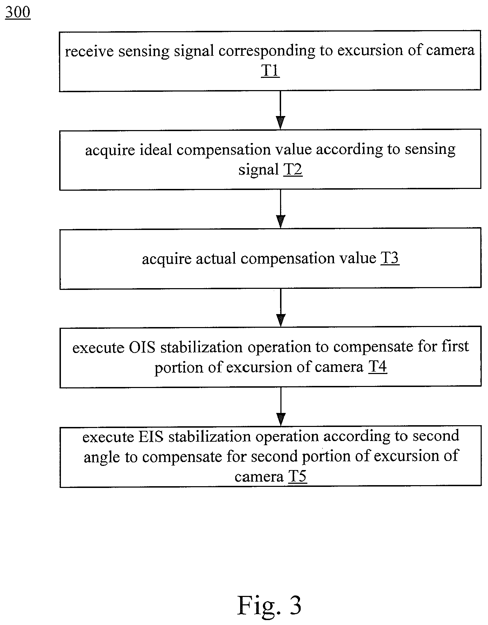

Another aspect of the present disclosure is described in the paragraphs below with reference to an operating method in Fig. 3. However, the present disclosure is not limited to the embodiment below.

It should be noted that the operating method can be applied to a camera device having a structure that is the same as or similar to the structure of the camera device 100 shown in Fig. 1. To simplify the description below, the embodiment shown in Fig. 1 will be used as an example to describe the operating method according to an embodiment of the present disclosure. However, the present disclosure is not limited to application to the embodiment shown in Fig. 1.

Reference is made to Figs. 1 and 3. The operating method 300 includes the operations below.

In operation T1, the one or more processing components 110 receive a sensing signal corresponding to an excursion (e.g., 3.5mm) of the camera 140. Details of operation T1 can be ascertained with reference to operation S1, and a description in this regard will not be repeated herein.

In operation T2, the one or more processing components 110 acquire an ideal compensation value, which corresponds to the excursion (e.g., 3.5mm) of the camera 140, according to the sensing signal. Details of operation T2 can be ascertained with reference to operation S2, and a description in this regard will not be repeated herein.

In operation T3, the one or more processing components 110 acquire an actual compensation value (e.g., 2 degrees). In one embodiment, the actual compensation value corresponds to a physical limitation of the OIS component 130. In one embodiment, the actual compensation value corresponds to a physical limitation corresponding to one or more actuators of the OIS component 130.

In operation T4, the one or more processing components 110 make the OIS component 130 execute the OIS stabilization operation according to the actual compensation value (e.g., 2 degrees) to compensate for a first portion (e.g., 2mm) of the excursion (e.g., 3.5mm) of the camera 140.

In one embodiment, the one or more processing components 110 may provide the actual compensation value to the OIS component 130 to make the OIS component 130 execute the OIS stabilization operation according to the actual compensation value.

In operation T5, the one or more processing components 110 control the EIS component 150 to execute an EIS stabilization operation according to the ideal compensation value (e.g., 3.5 degrees) and the actual compensation value (e.g., 2 degrees) to compensate for a second portion (e.g., 1.5mm) of the excursion of the camera (e.g., 3.5mm). Details of operation T5 can be ascertained with reference to operation S4, and a description in this regard will not be repeated herein.

Through the operations described above, both of the OIS component 130 and the EIS component 150 can compensate for the excursion of the camera 140, so that the video quality can be increased.

It should be noted that, in some embodiments, the OIS component 130 may have a passive or active software filter to avoid image jump, so that even if a compensation value equal to the physical limitation of the OIS component 130 (e.g., 2 degrees) is provided to the OIS component 130, the OIS component 130 may actually compensate for a smaller compensation value (e.g., 1.8 degrees).

Additionally, in some embodiments, the EIS stabilization operation may have a software processing limitation. In these embodiments, the software processing limitation may be realized by a passive software filter in the EIS component 150 or the one or more processing components 110. In these embodiments, even if the ideal compensation value (e.g., 3.5 degrees) and the actual compensation value (e.g., 2 degrees) are provided to the EIS component 150, the EIS component 150 may actually compensate for a compensation value (e.g., 1.3 degrees) smaller than the difference between the ideal compensation value and the actual compensation value.

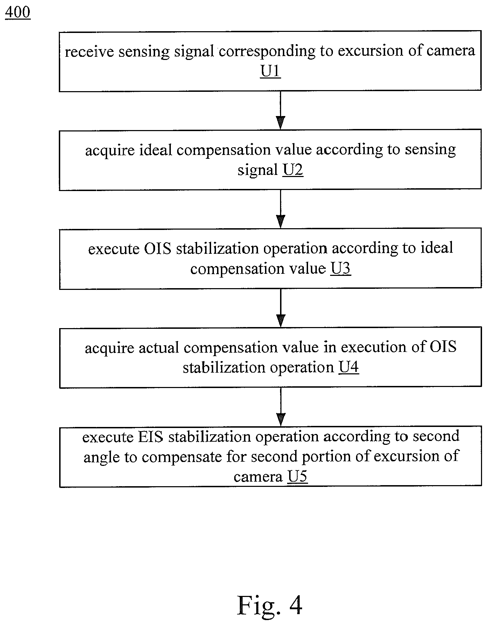

Another aspect of the present disclosure is described in the paragraphs below with reference to an operating method in Fig. 4. However, the present disclosure is not limited to the embodiment below.

It should be noted that the operating method can be applied to a camera device having a structure that is the same as or similar to the structure of the camera device 100 shown in Fig. 1. To simplify the description below, the embodiment shown in Fig. 1 will be used as an example to describe the operating method according to an embodiment of the present disclosure. However, the present disclosure is not limited to application to the embodiment shown in Fig. 1.

Reference is made to Figs. 1 and 4. The operating method 300 includes the operations below.

In operation U 1, the one or more processing components 110 receive a sensing signal corresponding to an excursion (e.g., 3.5mm) of the camera 140. Details of operation U1 can be ascertained with reference to operation S1, and a description in this regard will not be repeated herein.

In operation U2, the one or more processing components 110 acquire an ideal compensation value, which corresponds to the excursion (e.g., 3.5mm) of the camera 140, according to the sensing signal. Details of operation U2 can be ascertained with reference to operation S2, and a description in this regard will not be repeated herein.

In operation U3, the one or more processing components 110 make the OIS component 130 execute the OIS stabilization operation according to the ideal compensation value. In one embodiment, the one or more processing components 110 may provide the ideal compensation value to the OIS component 130 to make the OIS component 130 execute the OIS stabilization operation according to the ideal compensation value. In one embodiment, the OIS stabilization operation executed in accordance with the ideal compensation value (e.g., 3.5 degrees) merely compensates for a part of the excursion (e.g., a first portion (e.g., 2mm) of the excursion (e.g., 3.5mm)) of the camera 140.

In operation U4, the one or more processing components 110 acquire an actual compensation value (e.g., 2 degrees) in execution of the OIS stabilization operation for compensating for the first portion (e.g., 2mm) of the excursion (e.g., 3.5mm) of the camera 140.

In one embodiment, the one or more processing components 110 may detect one or more locations of one or more of the camera 140, an image sensor of the camera 140, and a lens of the camera 140 in execution of the OIS stabilization operation by using a location sensor. Subsequently, the one or more processing components 110 may acquire the actual compensation value according to the one or more locations of the one or more of the camera 140, an image sensor of the camera140, and a lens of the camera 140.

In operation U5, the one or more processing components 110 control the EIS component 150 to execute an EIS stabilization operation according to the ideal compensation value (e.g., 3.5 degrees) and the actual compensation value (e.g., 2 degrees) to compensate for a second portion (e.g., 1.5mm) of the excursion of the camera (e.g., 3.5mm). Details of operation U5 can be ascertained with reference to operation S4, and a description in this regard will not be repeated herein.

Through the operations described above, both of the OIS component 130 and the EIS component 150 can compensate for the excursion of the camera 140, so that the video quality can be increased.

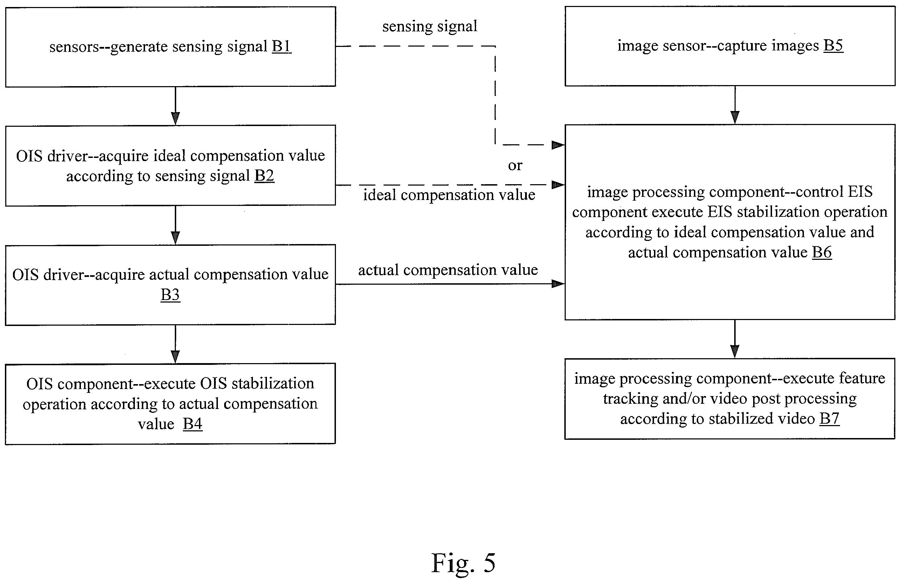

To allow the disclosure to be more fully understood, an illustrative example is described with reference to Fig. 5 in the paragraphs below, but the present disclosure is not limited to the example below.

In operation B1, when the camera device 100 records a video and is shaken, the sensors 102 generate a sensing signal corresponding to an excursion of the camera 140. In one embodiment, the sensing signal may correspond to an angular velocity of the camera device 100. In one embodiment, the sensing signal may correspond to an angular velocity of the camera device 100 and an acceleration of the camera device 100.

In operation B2, an OIS driver performs an integration according to the sensing signal (e.g., integrates the angular velocity or both the angular velocity and the acceleration), to acquire an ideal compensation value (e.g., 3.5 degrees) for compensating for the excursion of the camera 140. In one embodiment, the ideal compensation value may be an angle, a distance, and/or a location. In one embodiment, the OIS driver may be implemented by the one or more processing components 110, or integrated circuits.

In operation B3, the OIS driver acquires an actual compensation value (e.g., 2 degrees). In one embodiment, the actual compensation value corresponds to a physical limitation of the OIS component 130. In one embodiment, the actual compensation value may be an angle, a distance, and/or a location.

In operation B4, the OIS component 130 executes an OIS stabilization operation according to the actual compensation value to compensate for a first portion (e.g., 2mm) of the excursion (e.g., 3.5mm) of the camera 140 to thereby stabilize the video.

In operation B5, an image sensor in the camera 140 captures images in the video.

In operation B6, an image processing component controls the EIS component 150 to execute the EIS stabilization operation according to the ideal compensation value and the actual compensation value to stabilize the video. In one embodiment, the image processing component may control the EIS component 150 to execute an EIS stabilization operation according to a difference (e.g., 1.5 degrees) between the ideal compensation value (e.g., 3.5 degrees) and the actual compensation value (e.g., 2 degrees). In one embodiment, the image processing component may be implemented by the one or more processing components 110, or integrated circuits.

In one embodiment, the image processing component may receive the ideal compensation value from the OIS driver and control the EIS component 150 to execute the EIS stabilization operation according to the received ideal compensation value and the actual compensation value. In a different embodiment, the image processing component may receive the sensing signal from the sensors 102, calculate the ideal compensation value according to the received sensing signal, and control the EIS component 150 to execute the EIS stabilization operation according to the calculated ideal compensation value and the actual compensation value.

In operation B7, the image processing component executes feature tracking and/or video post processing according to the stabilized video. In some embodiment, the video post processing can be executed after real time image stabilization to significantly improve the quality of the video.

Through the operations described above, both of the OIS component 130 and the EIS component 150 can compensate for the excursion of the camera 140, so that the video quality can be increased, and the accuracy of feature tracking can also be increased.

It should be noted that, in some embodiments, the operating methods 200, 300, 400 described above may be implemented as a computer program. When the computer program is executed by a computer, an electronic device, or the one or more processing components 110 in Fig. 1, this executing device performs the operating methods 200, 300, 400. The computer program can be stored in a non-transitory computer readable medium such as a ROM (read-only memory), a flash memory, a floppy disk, a hard disk, an optical disc, a flash drive, a tape, a database accessible from a network, or any storage medium with the same functionality that can be contemplated by persons of ordinary skill in the art to which this invention pertains.

In addition, it should be noted that in the operations of the operating methods 200, 300, 400 described above, no particular sequence is required unless otherwise specified. Moreover, the operations of the management methods described above also may be performed simultaneously or the execution times thereof may at least partially overlap.

Furthermore, operations of the operating methods 200, 300, 400 described above may be added to, replaced, and/or eliminated as appropriate, in accordance with various embodiments of the present disclosure.

Although the present invention has been described in considerable detail with reference to certain embodiments thereof, other embodiments are possible. Therefore, the scope of the appended claims should not be limited to the description of the embodiments contained herein.

## Claims

1. A method applied to a camera device comprising:
receiving a sensing signal corresponding to an excursion of a camera;
acquiring an ideal compensation value according to the sensing signal;
controlling an optical image stabilization (OIS) component to execute an OIS stabilization operation to compensate for a first portion of the excursion of the camera, wherein the OIS stabilization operation corresponds to an actual compensation value; and
controlling an electronic image stabilization (EIS) component to execute an EIS stabilization operation according to the ideal compensation value and the actual compensation value to compensate for a second portion of the excursion of the camera.

2. The method as claimed in claim 1, wherein the sensing signal corresponds to an angular velocity of the camera device.

3. The method as claimed in claim 1, wherein the EIS stabilization operation is executed according to a difference between the ideal compensation value and the actual compensation value.

4. The method as claimed in claim 1, wherein the actual compensation value corresponds to a physical limitation of the OIS component.

5. The method as claimed in claim 1, wherein the operation of controlling the OIS component to execute the OIS stabilization operation comprises:
making the OIS component execute the OIS stabilization operation according to the actual compensation value.

6. The method as claimed in claim 1, wherein the operation of controlling the OIS component to execute the OIS stabilization operation comprises:
making the OIS component execute the OIS stabilization operation according to the ideal compensation value; and
acquiring the actual compensation value in execution of the OIS stabilization operation.

7. The method as claimed in claim 6, wherein the operation of acquiring the actual compensation value in execution of the OIS stabilization operation comprises:
detecting one or more locations of one or more of a camera, an image sensor of the camera, and a lens of the camera in execution of the OIS stabilization operation; and
acquiring the actual compensation value according to the one or more locations of the one or more of the camera, the image sensor of the camera, and the lens of the camera.

8. A camera device comprising:
a camera;
an optical image stabilization (OIS) component;
an electronic image stabilization (EIS) component;
one or more processing components electrically connected to the camera, the EIS component, and the OIS component;
a memory electrically connected to the one or more processing components; and
one or more programs, wherein the one or more programs are stored in the memory and configured to be executed by the one or more processing components, the one or more programs comprising instructions for:
receiving a sensing signal corresponding to an excursion of a camera;
acquiring an ideal compensation value according to the sensing signal;
controlling the OIS component to execute an OIS stabilization operation to compensate for a first portion of the excursion of the camera, wherein the OIS stabilization operation corresponds to an actual compensation value; and
controlling the EIS component to execute an EIS stabilization operation according to the ideal compensation value and the actual compensation value to compensate for a second portion of the excursion of the camera.

9. The camera device as claimed in claim 8, wherein the sensing signal corresponds to an angular velocity of the camera device.

10. The camera device as claimed in claim 8, wherein the EIS stabilization operation is executed according to a difference between the ideal compensation value and the actual compensation value.

11. The camera device as claimed in claim 8, wherein the actual compensation value corresponds to a physical limitation of the OIS component.

12. The camera device as claimed in claim 8, wherein the one or more programs further comprises instructions for:
making the OIS component execute the OIS stabilization operation according to the actual compensation value.

13. The camera device as claimed in claim 8, wherein the one or more programs further comprises instructions for:
making the OIS component execute the OIS stabilization operation according to the ideal compensation value; and
acquiring the actual compensation value in execution of the OIS stabilization operation.

14. The camera device as claimed in claim 13, wherein the one or more programs further comprises instructions for:
detecting one or more locations of one or more of a camera, an image sensor of the camera, and a lens of the camera in execution of the OIS stabilization operation; and
acquiring the actual compensation value according to the one or more locations of the one or more of the camera, the image sensor of the camera, and the lens of the camera.

15. A non-transitory computer readable storage medium storing one or more programs comprising instructions, which when executed, causes one or more processing components to perform operations comprising:
receiving a sensing signal corresponding to an excursion of a camera;
acquiring an ideal compensation value according to the sensing signal;
controlling an optical image stabilization (OIS) component to execute an OIS stabilization operation to compensate for a first portion of the excursion of the camera, wherein the OIS stabilization operation corresponds to an actual compensation value; and
controlling an electronic image stabilization (EIS) component to execute an EIS stabilization operation according to the ideal compensation value and the actual compensation value to compensate for a second portion of the excursion of the camera.
